# EUROPÄISCHE PATENTANMELDUNG

(11) **EP 1 411 188 A1**
(43) Veröffentlichungstag der Anmeldung: **21.04.2004**
(21) Anmeldenummer: 02023345.8
(22) Anmeldetag: 18.10.2002
(51) Int. Cl.: E04H 9/14

(54) **Flutungsvorrichtung**

(71) Anmelder: RWE Mechatronics GmbH, 53891 Mechernich (DE)
(72) Erfinder: Scheuss, Michael, 50997 Köln (DE); Werk, Hans-Helmar, 53894 Mechermich (DE); Wollseifen, Udo, 52385 Niedecken (DE)
(74) Vertreter: Rohmann, Michael, Dr.

(57) **Zusammenfassung**

Flutungsvorrichtung zur gezielten Flutung eines Gebäudes bei Hochwasser. Es ist eine Zuführungsleitung für (1) das in das Gebäude einzulassende Wasser vorgesehen, die mit zumindest einer Absperrvorrichtung versehen ist. An die Zuführungsleitung ist ein Filteraggregat (9) aus zumindest zwei Filtermodulen, nämlich einem Einströmfiltermodul (10) und einem Ausströmfiltermodul (12) angeschlossen. Das Filtermittel des Einströmfiltermoduls ist zur Filterung von grobkörnigeren Partikeln aus dem einzulassenden Wasser eingerichtet. Das Filtermittel des Ausströmfiltermoduls ist zur Filterung von feinkörnigeren Partikeln eingerichtet.

## Beschreibung

Die Erfindung betrifft eine Flutungsvorrichtung zur gezielten Flutung eines Gebäudes bei Hochwasser.

Insbesondere in letzter Zeit hat das Ausmaß von Überflutungen durch über ihre Ufer tretende Flüsse oder durch Sturmfluten an Meeresküsten zugenommen. Durch den Bau von Deichen versucht man in der Praxis die Überflutungsgebiete flächenmäßig einzugrenzen und somit das Hochwasser in gewisse Schranken zu weisen. Allerdings tritt das Wasser bei Hochwasserkatastrophen immer häufiger über die Deiche oder die Deiche brechen unter dem Druck des anstehenden Hochwassers. Die in den Überflutungsgebieten befindlichen Gebäude sind den Wasserfluten dann in der Regel schutzlos ausgesetzt. Insbesondere Kellerräume und niedrig gelegenere Räume solcher Gebäude werden dann sehr schnell und unkontrolliert von dem Hochwasser überflutet. Eine totale Abdichtung eines Gebäudes ist praktisch nicht möglich und würde zudem die Standsicherheit durch die wirkenden Auftriebskräfte und Drücke in hohem Maße gefährden. Das eintretende Wasser führt in der Regel Schmutz und Schlamm mit sich bzw. weist einen hohen Anteil an Sedimenten, Schwebstoffen und öligen Bestandteilen auf und ist eventuell chemisch oder biologisch kontaminiert. Dadurch werden überflutete Räume und Einrichtungen erheblich verschmutzt und nach Rückgang des Hochwassers sind sehr aufwendige Reinigungs- und Instandsetzungsarbeiten erforderlich. Oftmals sind die Räume und Einrichtungen aufgrund des Verschmutzungsgrades nicht mehr für den bisherigen Verwendungszweck geeignet. Außerdem resultiert nach Rückgang des Hochwassers in der Regel eine störende Geruchsbelästigung in dem betreffenden Gebäude.

Der Erfindung liegt das technische Problem zugrunde, eine Vorrichtung anzugeben, mit der die vorstehend beschriebenen Nachteile effektiv vermieden bzw. zumindest reduziert werden können.

Zur Lösung dieses technischen Problems lehrt die Erfindung eine Flutungsvorrichtung zur gezielten Flutung eines Gebäudes bei Hochwasser,
wobei zumindest eine Zuführungsleitung für das in das Gebäude einzulassende Wasser vorgesehen ist und wobei an die Zuführungsleitung ein Filteraggregat aus zumindest zwei Filtermodulen, nämlich einem Einströmfiltermodul und einem Ausströmfiltermodul angeschlossen ist,
wobei das Filtermittel des Einströmfiltermoduls zur Filterung von grobkörnigeren Partikeln aus dem einzulassenden Wasser eingerichtet ist und wobei das Filtermittel des Ausströmfiltermoduls zur Filterung von feinkörnigeren Partikeln eingerichtet ist. Die Zuführungsleitung ist zweckmäßigerweise mit zumindest einer Absperrvorrichtung versehen.

Der Erfindung liegt zunächst die Erkenntnis zugrunde, dass ein Gebäude bei anstehendem Hochwasser bzw. bei langsam steigendem Wasserspiegel aus statischen Gründen rechtzeitig kontrolliert geflutet werden muss. Die mit einer plötzlichen unkontrollierten Flutung verbundenen oben beschriebenen Nachteile werden verhindert.

Der Erfindung liegt weiterhin die Erkenntnis zugrunde, dass mit der erfindungsgemäßen Flutungsvorrichtung Schmutzanteile und Schadstoffe aus dem gezielt in das Gebäude eingelassenen Wasser auf einfache Weise sowie effektiv und funktionssicher abgetrennt werden können. Damit können die oben beschriebenen gravierenden nachteilhaften Folgen für ein überflutetes Gebäude verhindert bzw. beachtlich reduziert werden. Bei der erfindungsgemäßen Vorrichtung handelt es sich gleichsam um eine Flutungs- und Schmutzwasserfilteranlage. Es liegt im Rahmen der Erfindung, dass das einer erfindungsgemäßen Flutungsvorrichtung zugeordnete Gebäude mit der Maßgabe abgedichtet ist, dass Hochwasser nur oder zumindest im Wesentlichen über die Flutungsvorrichtung in das Gebäude eindringen kann.

Erfindungsgemäß ist eine Zuführungsleitung für das in das Gebäude einzulassende Wasser vorgesehen. Bei der Zuführungsleitung kann es sich um eine Schlauchleitung, insbesondere eine formstabile Schlauchleitung bzw. um eine Rohrleitung handeln. Zeckmäßigerweise ist die Zuführungsleitung in der Länge variierbar. Auf diese Weise kann die Position der Flutungsvorrichtung bzw. des Filteraggregates so gewählt werden, dass Hilfs- und Rettungswege nicht versperrt werden. - Bei der Absperrvorrichtung handelt es sich zweckmäßigerweise um ein geeignetes Absperrelement, beispielsweise einen Absperrschieber bzw. ein Absperrventil. Durch Öffnen der Absperrvorrichtung bzw. des Absperrelementes wird die gezielte Flutung des der Flutungsvorrichtung zugeordneten Gebäudes eingeleitet. Zweckmäßigerweise ist die Absperrvorrichtung so eingerichtet, dass die Menge bzw. der Mengenstrom des in das Gebäude einzulassenden Wassers variiert werden kann. Es liegt im Rahmen der Erfindung, dass der Absperrvorrichtung eine entsprechende Steuer- und/oder Regeleinrichtung zugeordnet ist.

Erfindungsgemäß besteht das Filteraggregat der Flutungsvorrichtung aus mehreren Filtermodulen. Ein Filtermodul kann eine mit Filtermittel gefüllte Filtereinheit bzw. ein mit einem Filtermittel gefülltes Filtergehäuse sein. Ein Filtermodul des erfindungsgemäßen Filteraggregates kann aber auch ein Filtersieb oder Filtergewebe sein. In diesem Fall ist das Filtersieb bzw. das Filtergewebe zugleich Filtermodul und Filtermittel. - Einströmfiltermodul meint im Rahmen der Erfindung das Filtermodul, das an der Einströmseite des Filteraggregates angeordnet ist und vorzugsweise von dem einzulassenden Wasser zuerst beaufschlagt wird. Ausströmfiltermodul meint das Filtermodul, das an der Ausströmseite des Filteraggregates angeordnet ist und dabei handelt es sich zweckmäßigerweise um das letzte Filtermodul, das von dem das Filteraggregat durchströmenden Wasser beaufschlagt wird. Dass das Einströmfiltermodul im Vergleich zum Ausströmfiltermodul zur Filterung von grobkörnigeren Partikeln eingerichtet ist, meint im Rahmen der Erfindung insbesondere, dass die entsprechenden Filteröffnungen (Sieblöcher, Maschen, Poren u.dgl.) größer bzw. weiter sind als beim Ausströmfiltermodul und somit lediglich grobkörnigere Partikeln zurückgehalten werden, während feinkörnigere Partikel durchgelassen werden. Diese feinkörnigeren Partikeln werden dann von dem Ausströmfiltermodul oder einem anderen Filtermodul mit kleineren Filteröffnungen zurückgehalten.

Es liegt im Rahmen der Erfindung, dass das Filteraggregat zumindest ein weiteres Filtermodul aufweist, welches weitere Filtermodul zwischen dem Einströmfiltermodul und dem Ausströmfiltermodul angeordnet ist und dass die Filtermittel bzw. die Filteröffnungen der Filtermodule mit der Maßgabe eingerichtet sind, dass die Größe der von den Filtermodulen zurückzuhaltenden Partikel von dem Einströmfiltermodul zum Ausströmfiltermodul hin abnimmt. Zweckmäßigerweise befindet sich zwischen Einströmfiltermodul und Ausströmfiltermodul mehr als ein Filtermodul, vorzugsweise mehr als zwei Filtermodule. Die Größe der von jedem Filtermodul des Filteraggregates jeweils zurückzuhaltenden Partikel nimmt dabei vom Einströmfiltermodul zum Ausströmfiltermodul ab. Mit anderen Worten nimmt auch die Größe bzw. Weite der Filteröffnungen vom Einströmfiltermodul zum Ausströmfiltermodul hin ab. - Die Erfindung umfasst auch eine Flutungsvorrichtung, bei der zumindest die Mehrzahl der Filtermodule mit der Maßgabe eingerichtet ist, dass die Größe der zurückgehaltenen Partikel von der Einströmseite zur Ausströmseite des Filteraggregates hin abnimmt. Es könnten also beispielsweise ein oder zwei Filtermodule vorgesehen sein, die aufgrund der Größe der Filteröffnungen nicht in die Reihe die von der Einströmseite zur Ausströmseite abnehmenden Größe der Filteröffnungen passen. Vorzugsweise sind aber alle Filtermodule so eingerichtet, dass die Größe der von den Filtermodulen jeweils zurückgehaltenen Partikel von der Einströmseite zur Ausströmseite des Filteraggregates hin abnimmt.

Es liegt im Rahmen der Erfindung, dass die Filtermodule des Filteraggregates unmittelbar hintereinandergeschaltet sind bzw. unmittelbar aneinanderangrenzen. Damit ergibt sich ein sehr kompaktes wenig voluminöses Filteraggregat. Zweckmäßigerweise sind die Filtermodule mit Hilfe von Spannelementen zu dem Filteraggregat miteinander verbunden. Es liegt im Rahmen der Erfindung, dass einzelne Filtermodule in das Filteraggregat ein- bzw. ausbaubar sind. Aufgrund dieser Möglichkeit bzw. aufgrund des modularen Aufbaus kann das Filteraggregat auf einfache Weise an die Gegebenheiten angepasst werden und kann bei Bedarf durch weitere Filtermodule erweitert werden. Anzahl, Größe und Art der Filtermodule können somit an die örtlichen Gegebenheiten und an die zu erwartende Wassermenge sowie an den zu erwartenden Schmutzanteil auf einfache Weise abgestimmt werden.

Nach sehr bevorzugter Ausführungsform der erfindungsgemäßen Flutungsvorrichtung weist zumindest ein Filtermodul ein Filtersieb als Filtermittel auf und weist zumindest ein weiteres Filtermodul ein Filtergewebe als Filtermittel auf. Filtersieb meint im Rahmen der Erfindung Siebe, deren Löcher eine Lochweite von mehr als 1 mm haben. Filtergewebe meint insbesondere Metallgewebe oder Textilgewebe. Diese für das erfindungsgemäße Filteraggregat verwendeten Filtergewebe haben Porenweiten, die kleiner als 1 mm sind. Es liegt im Rahmen der Erfindung, dass das Einströmfiltermodul ein Filtersieb ist bzw. ein Filtersieb aufweist. Diesem ersten Filtersieb wird zweckmäßigerweise ein weiteres Filtersieb nachgeschaltet, dessen Lochweiten kleiner sind als die des ersten Filtersiebes. Nach einer bevorzugten Ausführungsform der Erfindung enthält zumindest ein Filtermodul eine lose Schüttung von Festkörpern als Filtermittel. Dabei kann es sich um Schüttungen aus Sand, Kies, Kieselgur, Aktivkohle u.dgl. handeln. Wenn nach bevorzugter Ausführungsform der Erfindung zumindest ein Filtermodul ein Adsorptionsmittel enthält, können insbesondere auch chemische Kontaminationen des einzulassenden Wassers effektiv beseitigt werden. Es kann fernerhin zumindest ein Filtermodul vorgesehen werden, das eine Schüttung von porösen Körpern als Filtermittel aufweist. - Nach sehr bevorzugter Ausführungsform des erfindungsgemäßen Filteraggregates sind die Filtermittel der Filtermodule regenerierbar.

Es liegt im Rahmen der Erfindung, dass das Filteraggregat der Flutungsvorrichtung mit der Maßgabe angeordnet ist, dass das Filteraggregat bzw. die Filtermodule des Filteraggregates unter Einwirkung der Schwerkraft von dem einzulassenden Wasser durchströmbar sind. Die Flutungsvorrichtung bzw. das Filteraggregat wird also so angeordnet, dass sich bei anstehendem Hochwasser Höhenniveauunterschiede ergeben, die es erlauben, dass bei der Flutung des zugeordneten Gebäudes das Wasser lediglich unter Einwirkung der Schwerkraft durch das Filteraggregat strömt. Insoweit kann bei der erfindungsgemäßen Flutungsvorrichtung auf eine Energiezufuhr verzichtet werden und Pumpen oder ähnliche Einrichtungen sind nicht erforderlich. Von besonderem Vorteil ist in diesem Zusammenhang, dass auch bei Ausfall der elektrischen Versorgung ein funktionssicherer Betrieb der Flutungsvorrichtung möglich ist.

Nach sehr bevorzugter Ausführungsform der Erfindung ist das Filteraggregat der erfindungsgemäßen Flutungsvorrichtung außerhalb des zu flutenden Gebäudes angeordnet. Die Zuführungsleitung ist dann zweckmäßigerweise mit einem Ende an das Ausströmfiltermodul angeschlossen und mit dem anderen Ende an das Gebäude angeschlossen. Eine solche außerhalb eines Gebäudes angeordnete Flutungsvorrichtung kann grundsätzlich auch für die Flutung mehrerer Gebäude vorgesehen werden. - Es liegt auch im Rahmen der Erfindung, dass das Filteraggregat innerhalb des zu flutenden Gebäudes angeordnet ist. Dann ist zweckmäßigerweise die Zuführungsleitung mit einem Ende an das Einströmfiltermodul und mit dem anderen Ende an die Gebäudewand angeschlossen. - Im Übrigen ist vorzugsweise an das Filteraggregat eine Positionsanzeigeeinrichtung zur Anzeige der Position des Filteraggregates bei Überflutung angeschlossen.

Der Erfindung liegt die Erkenntnis zugrunde, dass mit der erfindungsgemäßen Flutungsvorrichtung eine gezielte und kontrollierte Flutung eines Gebäudes möglich ist, so dass die Gebäudestandsicherheit in keinster Weise beeinträchtigt wird. Außerdem erlaubt die erfindungsgemäße Flutungsvorrichtung ein effektives und funktionssicheres Entfernen von Schmutz- und Schadstoffen aus dem in das Gebäude eingelassenen Wasser. Es ist also eine Flutung bzw. eine künstliche Überschwemmung mit quasi sauberem Wasser möglich. Dadurch wird der Überschwemmungsschaden beachtlich reduziert und auch die späteren Instandhaltungs- und Reparaturarbeiten werden wirksam minimiert. Die Wasserqualität kann mit der Flutungsvorrichtung so verbessert werden, dass spätere Geruchsbelästigungen aufgrund des Hochwassers im Wesentlichen ausgeschlossen werden können. Der modulare Aufbau des Filtersystems erlaubt eine einfache Anpassung an das zu flutende Gebäudevolumen sowie an die zu erwartenden Schmutz- bzw. Schadstoffarten und -mengen. Das Filteraggregat ist problemlos erweiterbar. Von besonderer Bedeutung ist weiterhin, dass sich die erfindungsgemäße Flutungsvorrichtung einfach montieren lässt. Ein Auf- oder Abbau ist mit ein bis zwei Personen möglich, die nicht über Fachkenntnisse verfügen müssen. Zu betonen ist fernerhin, dass die erfindungsgemäße Flutungsvorrichtung ohne Energiezufuhr betreibbar ist und deshalb auch nach dem Ausfall der elektrischen Versorgung funktionssicher arbeitet. Außerdem ist auch die Herstellung der Flutungsvorrichtung einfach und kostengünstig möglich.

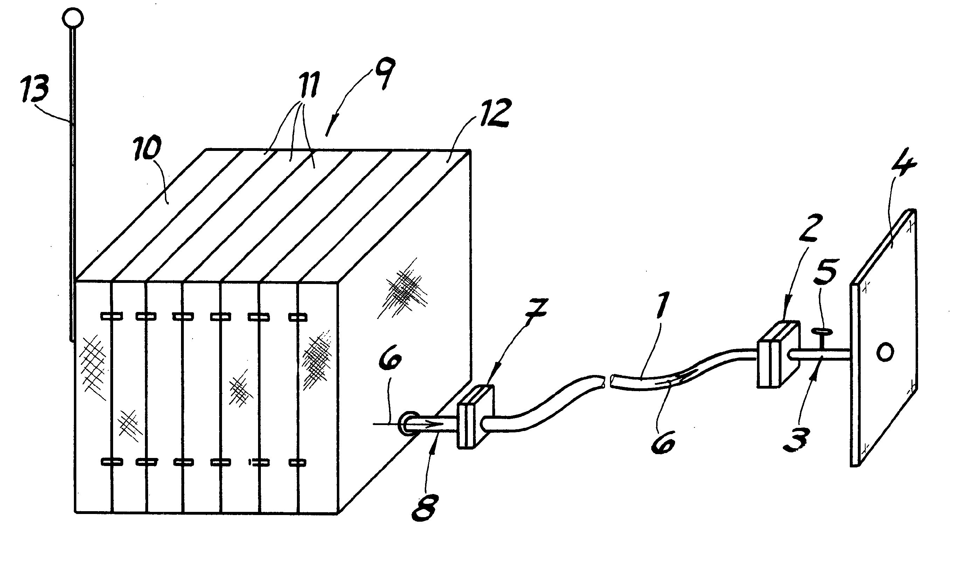

Nachfolgend wird die Erfindung anhand einer lediglich ein Ausführungsbeispiel darstellenden Zeichnung näher erläutert. Die einzige Figur zeigt in schematischer Darstellung eine perspektivische Ansicht einer erfindungsgemäßen Flutungsvorrichtung.

Die in der Figur dargestellte Flutungsvorrichtung dient zur gezielten Flutung eines nicht dargestellten Gebäudes bei Hochwasser. Es ist eine Zuführungsleitung 1 für das in das Gebäude einzulassende Wasser vorgesehen. Bei der Zuführungsleitung 1 handelt es sich vorzugsweise und im Ausführungsbeispiel um einen formstabilen Schlauch. Die Zuführungsleitung 1 ist über eine Kupplung 2 an das Anschlussstück 3 einer Flanschplatte 4 angeschlossen. Die Flanschplatte 4 ist für die Fixierung der Zuführungseinleitung 1 an dem Gebäude vorgesehen. In dem Anschlussstück 3 der Flanschplatte 4 befindet sich eine Absperrvorrichtung 5. Durch Öffnen der Absperrvorrichtung 5 wird das Gebäude geflutet und das einzulassende Wasser fließt in Richtung des Pfeiles 6 durch die Zuführungsleitung 1 in das Gebäude. Die Zuführungsleitung 1 ist weiterhin mit ihrem anderen Ende über eine Kupplung 7 mit dem Anschlussstück 8 eines Filteraggregates 9 verbunden. Vorzugsweise und im Ausführungsbeispiel handelt es sich um ein Filteraggregat 9 das außerhalb des Gebäudes angeordnet wird. Wenn das Filteraggregat 9 innerhalb eines Gebäudes angeordnet wird, fließt das eingelassene Wasser in entgegengesetzter Richtung des Pfeiles 6.

Bei Hochwasser strömt das einzulassende Wasser unter Wirkung der Schwerkraft in ein Einströmfiltermodul 10 ein, das im Ausführungsbeispiel als Filtersieb ausgebildet sein mag. Dem Einströmfiltermodul 10 sind Filtermodule 11 nachgeschaltet, die das Wasser nach dem Einströmfiltermodul 10 der Reihe nach durchströmt, bis es das Ausströmfiltermodul 12 erreicht. Das Wasser verlässt das Ausströmfiltermodul 12 über das Anschlussstück 8 in Richtung des Gebäudes. Erfindungsgemäß nimmt die Größe bzw. Weite der Filteröffnungen der Filtermodule von dem Einströmfiltermodul 10 zu dem Ausströmfiltermodul 12 ab. Mit anderen Worten nimmt die Größe der von den Filtermodulen zurückgehaltenen Partikel bzw. Schmutzteilchen vom Einströmfiltermodul 10 zum Ausströmfiltermodul 12 allmählich ab.

Im Ausführungsbeispiel ist im Übrigen eine ausfahrbare Stange 13 als Positionsanzeigeeinrichtung vorgesehen. Diese höhenvariable Stange 13 dient zur Anzeige der Position des Filteraggregates 9 bei Überflutung des Filteraggregates 9.

## Patentansprüche

1. Flutungsvorrichtung zur gezielten Flutung eines Gebäudes bei Hochwasser,
wobei zumindest eine Zuführungsleitung (1) für das in das Gebäude einzulassende Wasser vorgesehen ist und wobei an die Zuführungsleitung (1) ein Filteraggregat (9) aus zumindest zwei Filtermodulen, nämlich einem Einströmfiltermodul (10) und eine Ausströmfiltermodul (12) angeschlossen ist,
wobei das Filtermittel des Einströmfiltermoduls (10) zur Filterung von grobkörnigeren Partikeln aus dem einzulassenden Wasser eingerichtet ist und wobei das Filtermittel des Ausströmfiltermoduls (12) zu Filterung von feinkörnigeren Partikeln eingerichtet ist.

2. Flutungsvorrichtung nach Anspruch 1, wobei das Filteraggregat (9) zumindest ein weiteres Filtermodul (11) aufweist, welches weitere Filtermodul (11) zwischen dem Einströmfiltermodul (10) und dem Ausströmfiltermodul (12) angeordnet ist und wobei die Filtermittel der Filtermodule mit der Maßgabe eingerichtet sind, dass die Größe der von den Filtermodulen zurückgehaltenen Partikel von dem Einströmfiltermodul (10) zum Ausströmfiltermodul (12) hin abnimmt.

3. Flutungsvorrichtung nach einem der Ansprüche 1 oder 2, wobei zumindest ein Filtermodul ein Filtersieb als Filtermittel aufweist und/oder wobei zumindest ein Filtermodul ein Filtergewebe als Filtermittel aufweist.

4. Flutungsvorrichtung nach einem der Ansprüche 1 bis 3, wobei das Filtermittel eines Filtermoduls regenerierbar ist.

5. Flutungsvorrichtung nach einem der Ansprüche 1 bis 4, wobei das Filteraggregat (9) mit der Maßgabe angeordnet ist, dass das Filteraggregat (9) bzw. die Filtermodule unter Einwirkung der Schwerkraft von dem einzulassenden Wasser durchströmbar sind.

6. Flutungsvorrichtung nach einem der Ansprüche 1 bis 5, wobei das Filteraggregat außerhalb des Gebäudes angeordnet ist und wobei die Zuführungsleitung (1) mit einem Ende an das Ausströmfiltermodul (12) und mit dem anderen Ende an das Gebäude angeschlossen ist.

7. Flutungsvorrichtung nach einem der Ansprüche 1 bis 5, wobei das Filteraggregat innerhalb des Gebäudes angeordnet ist und wobei die Zuführungsleitung (1) mit einem Ende an das Einströmfiltermodul (10) und mit dem anderen Ende an das Gebäude bzw. an die Gebäudewand angeschlossen ist.

8. Flutungsvorrichtung nach einem der Ansprüche 1 bis 7, wobei an das Filteraggregat (9) eine Positionsanzeigeeinrichtung zur Anzeige der Position des Filteraggregates (9) bei Überflutung angeschlossen ist.
